# EUROPÄISCHE PATENTSCHRIFT

(11) **EP 3 999 327 B1**
(45) Veröffentlichungstag und Bekanntmachung des Hinweises auf die Patenterteilung: **28.08.2024**
(21) Anmeldenummer: 20731787.6
(22) Anmeldetag: 26.05.2020
(51) Int. Cl.: B29D 30/24, B29D 30/30

(54) **VERFAHREN UND VORRICHTUNG ZUR HERSTELLUNG VON REIFENROHLINGEN**
METHOD AND DEVICE FOR PRODUCING GREEN TYRES
PROCÉDÉ ET DISPOSITIF DE FABRICATION DE PNEUS CRUS

(30) Priorität: 18.07.2019 DE 102019119474
(43) Veröffentlichungstag der Anmeldung: 25.05.2022
(73) Patentinhaber: Harburg-Freudenberger Maschinenbau GmbH, 21079 Hamburg (DE)
(72) Erfinder: BEHRENS, Achim, 21271 Asendorf (DE); BUSCH, Ulrich, 22587 Hamburg (DE)
(74) Vertreter: Klickow & Wetzel PartGmbB
(86) Internationale Anmeldenummer: PCT/DE2020/100445
(87) Internationale Veröffentlichungsnummer: WO 2021/008645

(56) Entgegenhaltungen:
- EP-A1- 2 165 825
- EP-A1- 3 205 488
- DE-A1- 102013 103 633
- DE-A1- 102014 001 869
- DE-A1- 102018 003 301
- US-A1- 2002 108 716

## Beschreibung

Die Erfindung betrifft ein Verfahren zur Herstellung von Reifenrohlingen, bei dem ein Reifenrohling mithilfe einer Reifenaufbaumaschine auf mindestens einer Reifenaufbautrommel aus mehreren Lagen hergestellt wird.

Darüber hinaus betrifft die Erfindung eine Vorrichtung zur Herstellung von Reifenrohlingen im Sinne einer Reifenaufbaumaschine zur Herstellung von Reifenrohlingen aus mehreren Lagen.

Derartige Reifenaufbaumaschinen weisen in der Regel zumindest eine Reifenaufbautrommel und sogenannte Server auf, mit denen die verschiedenen Lagen eines Reifenrohlings auf die Reifenaufbautrommel(n) aufbringbar sind, sodass aus diesen ein Reifenrohling herstellbar ist.

Entsprechende Reifenaufbaumaschinen sind beispielsweise aus der DE 10 2018 003 301.6 bekannt.

Aus der EP 3205488 A1 ist bereits eine Vorrichtung zur Herstellung von Reifenrohlingen bekannt.

Die Vorrichtung weist eine Reifenaufbautrommel, einen Lagenserver, eine Kernsetzvorrichtung sowie eine Umschlagvorrichtung auf. Die Reifenaufbautrommel ist auf einer Trommelwelle angeordnet und besitzt einen Mittelteil und zwei relativ zum Mittelteil in axialer Richtung der Trommelwelle verfahrbare Trommelhälften.

Weitere Vorrichtungen zur Herstellung von Reifenrohlingen werden in der DE 10 2013 103 633 A1, der EP 2 380 728 A1 sowie der DE 10 2014 001 869 A1 beschrieben.

Die Reifenrohlinge werden in der Regel aus einer Mehrzahl von Lagen aufgebaut, die teilweise um zwei ringförmige Kerne umgeschlagen werden und in einem späteren Verfahrensschritt mit einem separat gefertigten Gürtelpaket und einem Laufstreifen verbunden werden. Weiterhin weisen die Reifenrohlinge Seitenwände auf, die als separate Elemente mit dem übrigen Reifenrohling verbunden werden. Je nachdem, ob der Laufstreifen des Reifenrohlings über die Seitenwände lappt oder die Seitenwände des Reifenrohlings über den Laufstreifen lappen, wird der Reifen nach TOS- (tread over sidewall) oder SOT- (sidewall over tread) Aufbau unterschieden.

Weiterhin ist es möglich, die Seitenwände eines Reifens materialsparend dadurch zu verstärken, dass zumindest eine Lage um die Kerne umgeschlagen und im Seitenwandbereich doppelt gelegt wird, anstatt eine zweite vollständige Lage in den Reifenrohling einzubringen. Derartige Reifen werden als Reifen mit einem Hochumschlag (high turn up oder auch C-ply) zumindest einer Lage bezeichnet.

Die vollautomatisierte Herstellung der Kombination von SOT-Reifenrohlingen mit zumindest einer als ein Hochumschlag ausgeführten Lage ist gemäß dem Stand der Technik noch nicht möglich. Es ist hierzu vielmehr in der Produktion entsprechender Reifenrohlinge noch ein erheblicher Umfang manueller Eingriffe erforderlich.

Eine Aufgabe der Erfindung besteht daher darin, eine Vorrichtung zur Herstellung von Reifenrohlingen im Sinne einer Reifenaufbaumaschine anzugeben, mit der die Herstellung von SOT-Reifenrohlingen mit zumindest einer als Hochumschlag ausgeführten Lage ermöglicht ist.

Diese Aufgabe wir erfindungsgemäß durch eine Vorrichtung zur Herstellung von Reifen aufweisend die Merkmale gemäß Patentanspruch 1 gelöst.

Eine weitere Aufgabe der Erfindung ist es, ein Verfahren zur Herstellung von Reifenrohlingen anzugeben, mit dem die Herstellung von SOT-Reifenrohlingen mit zumindest einer als Hochumschlag ausgeführten Lage ermöglicht ist.

Diese Aufgabe wir erfindungsgemäß durch ein Verfahren zur Herstellung von Reifenrohlingen aufweisend die Merkmale gemäß Patentanspruch 3 gelöst.

Die im Folgenden offenbarten Merkmale einer Vorrichtung zur Herstellung von Reifen im Sinne einer Reifenaufbaumaschine sind sowohl einzeln als auch in allen ausführbaren Kombinationen Teil der Erfindung.

Eine erfindungsgemäße Vorrichtung zur Herstellung von Reifen ist als eine Reifenaufbaumaschine ausgebildet, die zumindest eine Reifenaufbautrommel, einen Lagenserver und einen Seitenwandserver aufweist.

Die Reifenaufbautrommel weist in einer Ausführungsform der Erfindung einen Mittelteil und zwei in axialer Richtung neben dem Mittelteil angeordnete Trommelhälften auf, die mit dem Mittelteil auf einer gemeinsamen Trommelwelle angeordnet sind.

Die Trommelhälften sind in einer bevorzugten Ausführungsform der Erfindung in Relation zum Mittelteil auf der Trommelwelle in axialer Richtung verfahrbar, sodass diese unmittelbar neben dem Mittelteil oder mit einem Abstand zum Mittelteil positionierbar sind.

Der Mittelteil der Reifenaufbautrommel ist in einer Ausführungsform der Erfindung in radialer Richtung expandierbar, sodass der Umfang und der Durchmesser des Mittelteils einstellbar sind.

Weiterhin ist die Breite des Mittelteils der Reifenaufbautrommel in einer bevorzugten Ausführungsform der Erfindung einstellbar.

In einer Ausführungsform der Erfindung ist der Mittelteil der Reifenaufbautrommel dazu zweigeteilt, wobei die Module des Mittelteils zueinander in axialer Richtung der Trommelwelle verfahrbar sind.

In einer besonders bevorzugten Ausführungsform der Erfindung weisen die Module des Mittelteils eine fingerartig ausgebildete Gestalt auf, wobei die Finger der Module des Mittelteils ineinandergreifend angeordnet sind.

Die Reifenaufbautrommel weist in einer bevorzugten Ausführungsform der Erfindung eine Kernklemmvorrichtung auf, mit der die Kerne eines Reifenrohlings auf der Reifenaufbautrommel klemmend fixierbar sind.

In einer bevorzugten Ausführungsform der Erfindung weist die Kernklemmvorrichtung der Reifenaufbautrommel dazu radial ausfahrbare Schultern auf, mit denen die Kerne von innen klemmbar sind.

In einer weiteren Ausführungsform der Erfindung weist die Reifenaufbaumaschine im Bereich der Reifenaufbautrommel mindestens eine Umschlagvorrichtung auf, mit der die Lagen des Reifenrohlings um die Kerne umschlagbar und / oder an die übrigen Lagen des Reifenrohlings andrückbar sind.

In einer bevorzugten Ausführungsform der Erfindung weist die Reifenaufbaumaschine zwei Umschlagvorrichtungen auf, mit denen die Lagen an beiden Seiten eines Reifenrohlings zeitgleich umschlagbar bzw. andrückbar sind.

In einer Ausführungsform der Erfindung sind die Umschlagvorrichtungen als expandierbare Bälge ausgebildet.

In einer weiteren Ausführungsform der Erfindung weisen die Umschlagvorrichtungen Umschlagfinger und / oder Rollen auf.

In einer bevorzugten Ausführungsform der Erfindung sind die Umschlagvorrichtungen im Bereich der Trommelhälften der Reifenaufbautrommel angeordnet.

In einer weitern Ausführungsform der Erfindung weist die Reifenaufbaumaschine im Bereich der Reifenaufbautrommel eine Belüftungsvorrichtung zur Belüftung des Reifenrohlings von innen auf.

Die Reifenaufbautrommel ist in einer Ausführungsform mithilfe einer Antriebsvorrichtung rotierbar.

In einer weiteren Ausführungsform der Erfindung ist die Reifenaufbautrommel gemeinsam mit der Trommelwelle zumindest in axialer Richtung der Trommelwelle im Bereich der Reifenaufbaumaschine verfahrbar, sodass die Reifenaufbautrommel im Arbeitsbereich verschiedener Einrichtungen der Reifenaufbaumaschine positionierbar ist.

Eine solche Einrichtung ist beispielsweise der Lagenserver. Mit dem Lagenserver sind die verschiedenen Lagen eines Reifenrohlings auf die Reifenaufbautrommel übergebbar.

In einer weiteren Ausführungsform der Erfindung weist die Reifenaufbaumaschine eine Kernsetzvorrichtung auf. Mithilfe der Kernsetzvorrichtung sind die ringförmig ausgebildeten Kerne eines Reifenrohlings setzbar.

Die Kernsetzvorrichtung ist in einer Ausführungsform der Erfindung im Bereich einer weiteren Einrichtung der Reifenaufbaumaschine angeordnet, die im Folgenden als Reifenaufbauring bezeichnet ist.

Im Arbeitsbereich des Reifenaufbauringes sind in einer Ausführungsform der Erfindung somit die Kerne setzbar.

In einer weiteren Ausführungsform der Erfindung sind im Arbeitsbereich des Reifenaufbauringes das Gürtelpaket und der Laufstreifen des Reifenrohlings mit den Lagen des übrigen auf der Reifenaufbautrommel aufgebauten Reifenrohlings verbindbar.

In einer Ausführungsform der Erfindung weist diese eine Andrückvorrichtung zum Andrücken des Gürtelpakets und des Laufstreifens an den übrigen Reigenrohling auf.

Die Andrückvorrichtung für das Gürtelpaket und den Laufstreifen ist in einer bevorzugten Ausführungsform der Erfindung im Arbeitsbereich des Reifenaufbaurings angeordnet.

Das Gürtelpaket ist ein einer Ausführungsform der Erfindung separat auf einer Gürteltrommel herstellbar, auf die die verschiedenen Materiallagen des Gürtelpakets sowie der Laufstreifen mithilfe mindestens eines Laufstreifenservers übergebbar sind.

Die Gürteltrommel ist in einer bevorzugten Ausführungsform der Erfindung aus dem Arbeitsbereich des Laufstreifenservers in den Arbeitsbereich des Reifenaufbaurings verfahrbar.

In einer bevorzugten Ausführungsform der Erfindung weist diese einen Seitenwandserver auf, mit dem das Material für die Seitenwände des Reifenrohlings auf die Reifenaufbautrommel übergebbar sind.

In einer besonders vorteilhaften Ausführungsform der Erfindung ist der Seitenwandserver zweigeteilt, sodass das Material für beide Seitenwände eines Reifenrohlings gleichzeitig an die Reifenaufbautrommel übergebbar ist.

Erfindungsgemäß ist der Seitenwandserver dabei derart ausgebildet, dass mit diesem das Material für jeweils eine Seitenwand auf je eine Trommelhälfte der Reifenaufbautrommel übergebbar ist, wobei die Trommelhälften in Relation zum Mittelteil der Reifenaufbautrommel beabstandet positioniert sind.

In einer Ausführungsform der Erfindung weist der Seitenwandserver dazu ein Seitenwandservermodul je Seitenwand auf, wobei diese Seitenwandservermodule senkrecht zur Transportrichtung des Materials, etwa parallel zur Längserstreckungsrichtung der Trommelwelle, voneinander etwa den gleichen Abstand aufweisen, wie die Trommelhälften, die in Relation zum Mittelteil der Reifenaufbautrommel beabstandet positioniert sind.

In einer besonders bevorzugten Ausführungsform ist der Lagenserver als ein Seitenwandservermodul verwendet.

Die im Folgenden offenbarten Merkmale eines Verfahrens zur Herstellung von Reifenrohlingen sind sowohl einzeln als auch in allen ausführbaren Kombinationen Teil der Erfindung.

Ein erfindungsgemäßes Verfahren zur Herstellung von Reifenrohlingen umfasst die folgenden Schritte:
1. Positionieren einer ersten Lage (Inner Liner) des Reifenrohlings mittig auf der Reifenaufbautrommel
2. Positionieren einer zweiten Lage über der ersten Lage mittig auf der Reifenaufbautrommel (Body Ply)
3. Expandieren des Mittelteils in radialer Richtung
4. Kerne setzen
5. Kerne klemmen
6. Umschlagen der Lage(n) um die Kerne
7. Übergeben des Materials für die Seitenwände des Reifenrohlings auf je eine Trommelhälfte, wobei die Trommelhälften in Relation zum Mittelteil der Reifenaufbautrommel beabstandet positioniert sind
8. Verfahren der Trommelhälften zum Mittelteil hin, sodass das Seitenwandmaterial bereichsweise unter den Kernen des Reifenrohlings positioniert ist
9. Andrücken des Seitenwandmaterials unterhalb der Kerne
10. Belüftung des Reifenrohlings (Karkasse)
11. Positionieren und Andrücken des Gürtelpakets und des Laufstreifens an den übrigen Reifenrohling
12. Andrücken der Seitenwände an den Reifenrohling, sodass diese bereichsweise den Laufstreifen überlappen

Bei der vorstehenden Auflistung handelt es sich um eine nichtabschließende Aufzählung von Verfahrensschritten eines erfindungsgemäßen Verfahrens zur Herstellung von Reifen. Die Durchführung der aufgeführten Verfahrensschritte ist aber für die Herstellung von Reifenrohlingen gemäß einem Ausführungsbeispiel ausreichend.

Weitere Verfahrensschritte können insbesondere der Transport der Reifenaufbautrommel zum Reifenaufbauring und/oder zum Lagen- bzw. Seitenwandserver, die Herstellung des Gürtelpakets auf einer Gürteltrommel, sowie der Transport des Gürtelpakets und des Laufstreifens zum Reifenaufbauring sein.

In einem erfindungsgemäßen Verfahren zur Herstellung von Reifen wird zumindest eine Lage (Body ply) im Hochumschlag ausgeführt. Die entsprechende Lage ist dazu zumindest so breit ausgeführt, dass diese nach dem Umschlag weiter um den darunterliegenden Reifenrohling anliegt, als das Seitenwandmaterial, wenn dieses direkt auf die gleiche unter der im Hochumschlag ausgeführten Lage (Body ply) liegende Lage angedrückt würde.

Eine im Hochumschlag ausgeführte Lage (Body ply) des Reifenrohlings bewirkt eine Verstärkung der Seitenwände des Reifens bei gleichzeitiger Materialeinsparung im Mittelbereich des Reifens im Vergleich zu einer zusätzlichen Lage (Body ply) dadurch, dass durch die umgeschlagenen Bereiche der im Hochumschlag ausgeführten Lage (Body ply) nicht der gesamte Mittelbereich des Reifenrohlings bedeckt ist. Im Mittelbereich des Reifens ist eine zusätzliche Verstärkung durch eine Lage (Body ply) in der Regel nicht erforderlich.

In einer bevorzugten Ausführungsform des erfindungsgemäßen Verfahrens zur Herstellung von Reifen ist eine erfindungsgemäße Vorrichtung zur Herstellung von Reifen verwendet.

Erfindungsgemäß kann auch eine andere Anzahl von Lagen zur Herstellung des Reifenrohlings verwendet werden. Vorzugsweise sind zur Herstellung eines Reifenrohlings mehr Lagen verwendet.

In den nachfolgenden Figuren sind mögliche Aufbauformen von Reifenrohlingen im SOT-Aufbau mit Hochumschlag einer Lage und die Verfahrensschritte einer erfindungsgemäßen Ausführungsform eines Verfahrens zur Herstellung von Reifenrohlingen beispielhaft dargestellt. Es zeigen:
- Figur 1:: Eine Teilansicht eines Schnittes einer Variante eines Reifens im SOT-Aufbau mit Hochumschlag einer Lage,
- Figur 2:: Eine Teilansicht eines Schnittes einer weiteren Variante eines Reifens im SOT-Aufbau mit Hochumschlag einer Lage,
- Figur 3:: Eine Teilansicht eines Schnittes einer weiteren Variante eines Reifens im SOT-Aufbau mit Hochumschlag einer Lage,
- Figur 4:: Eine schematische Darstellung der Positionierung einer ersten Lage (Inner Liner) auf einer Reifenaufbautrommel und eine perspektivische Ansicht einer Reifenaufbautrommel,
- Figur 5:: Eine schematische Darstellung der Positionierung einer zweiten Lage (Body ply) auf einer Reifenaufbautrommel und eine Seitenansicht einer Reifenaufbautrommel,
- Figur 6:: Die Darstellung aus Figur 5 mit eingezeichneter Position der äußeren Enden des Seitenwandmaterials,
- Figur 7:: Eine schematische Ansicht eines Ausschnittes der Reifenaufbautrommel im Bereich der Kernsetzvorrichtung,
- Figur 8:: Eine schematische Darstellung eines Ausschnittes der Reifenaufbautrommel in einem Verfahrensschritt bei der Kernsetzung und eine Seitenansicht einer Reifenaufbautrommel,
- Figur 9:: Eine schematische Darstellung eines Ausschnittes der Reifenaufbautrommel in einem weiteren Verfahrensschritt bei der Kernsetzung,
- Figur 10:: Eine schematische Darstellung eines Ausschnittes der Reifenaufbautrommel bei der Kernklemmung,
- Figur 11:: Eine schematische Darstellung eines Ausschnittes der Reifenaufbautrommel beim Lagenumschlag,
- Figur 12:: Eine schematische Darstellung eines Ausschnittes der Reifenaufbautrommel nach dem Lagenumschlag,
- Figur 13:: Eine schematische Darstellung eines Ausschnittes der Reifenaufbautrommel bei der Übergabe des Seitenwandmaterials von zwei Seitenwandservern einer erfindungsgemäßen Reifenaufbaumaschine,
- Figur 14:: Eine schematische Darstellung eines Ausschnittes der Reifenaufbautrommel nach der Übergabe des Seitenwandmaterials auf die Reifenaufbautrommel und eine Seitenansicht einer Reifenaufbautrommel,
- Figur 15:: Eine schematische Darstellung eines Ausschnittes der Reifenaufbautrommel bei der Herstellung eines Reifenrohlings,
- Figur 16:: Eine schematische Darstellung eines Ausschnittes der Reifenaufbautrommel vor der Verbindung des Gürtelpakets mit dem übrigen Reifenrohling,
- Figur 17:: Eine schematische Darstellung eines Ausschnittes der Reifenaufbautrommel bei der Verbindung des Gürtelpakets mit dem übrigen Reifenrohling,
- Figur 18:: Eine schematische Darstellung eines Ausschnittes der Reifenaufbautrommel beim Andrücken der Seitenwände an den übrigen Reifenrohling,
- Figur 19:: Eine schematische Darstellung eines Ausschnittes der Reifenaufbautrommel nach dem Andrücken der Seitenwände an den übrigen Reifenrohling und
- Figur 20:: Eine schematische Darstellung eines Ausschnittes der Reifenaufbautrommel nach der Fertigstellung des Reifenrohlings vor der Übergabe ein eine Entladevorrichtung.

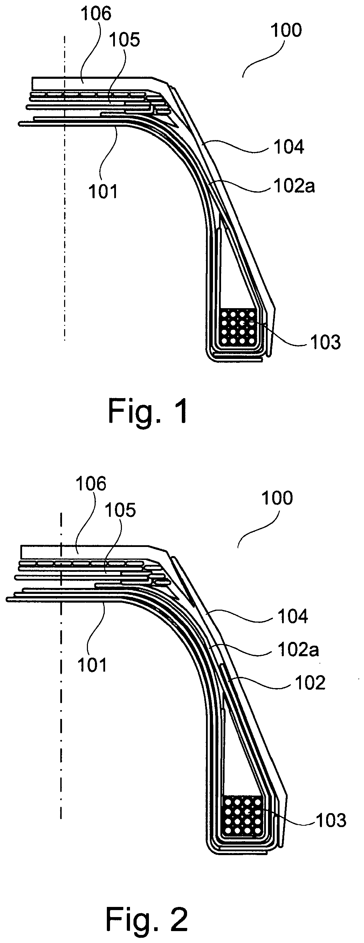

In Figur 1 ist eine Teilansicht eines Schnittes einer Variante eines Reifenrohling (100) im SOT-Aufbau mit Hochumschlag einer Lage dargestellt. Der Reifenrohling (100) weist innenliegend eine Inner Liner (101) genannte erste Lage auf, auf der als zweite Lage mit Hochumschlag eine Body Ply (102a) aufgebracht ist. Die Body Ply mit Hochumschlag (102a) ist dabei um einen Kern (103) umgeschlagen, wobei der umgeschlagene Bereich des Body Ply mit Hochumschlag (102a) sich durch den gesamten Seitenwandbereich des Reifenrohlings (101) hindurch bis in den Mittelbereich des Reifenrohlings (100) erstreckt. Dort endet der Body Ply mit Hochumschlag (102a) mit einem Abstand zur gestrichelt dargestellten Symmetrieachse des Reifenrohlings (100).

Durch diesen Abstand ist die Menge des im Vergleich zur Verwendung einer weiteren vollständigen Body Ply (102) zur Verstärkung des Reifens im Seitenwandbereich eingesparten Materials definiert. Weiterhin weist des Reifenrohling (100) eine Seitenwand (104), ein Gürtelparket (105), das durch die mehreren über der Body Ply mit Hochumschlag (102a) angeordneten Lagen gegeben ist, und einen Laufstreifen (106) auf. Das Material der Seitenwand (104) überlappt in dem dargestellten SOT-Aufbau des Reifenrohlings (100) das Material des Laufstreifens (106).

Figur 2 zeigt eine Teilansicht eines Schnittes einer weiteren Variante eines Reifenrohlings (100) im SOT-Aufbau mit Hochumschlag einer Lage. Im Vergleich zu der in Figur 1 dargestellten Variante weist dieser Reifenrohling (100) eine zusätzliche Lage auf, die durch Body Ply (102) ohne Hochumschlag realisiert ist.

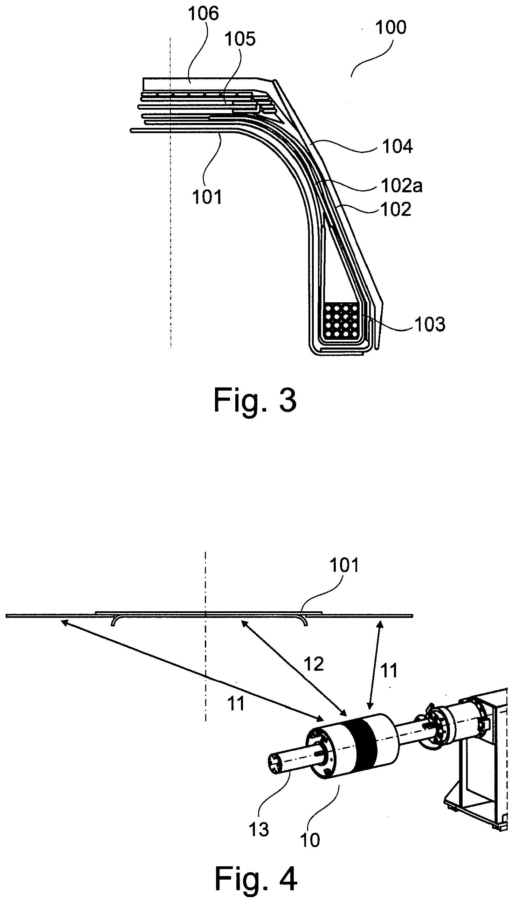

In Figur 3 ist eine Teilansicht eines Schnittes einer weiteren Variante eines Reifenrohlings (100) im SOT-Aufbau mit Hochumschlag einer Lage dargestellt, wobei der Reifenrohling (100) im Vergleich zu Figur 1 eine zusätzliche, durch Body Ply realisierte Lage aufweist, die nach unten an die darunterliegenden Lagen angedrückt ist.

Figur 4 zeigt eine schematische Darstellung eines Verfahrensschrittes eines erfindungsgemäßen Verfahrens zur Herstellung von Reifenrohlingen (100) in Form der Positionierung des Inner Liners (101) als eine erste Lage auf einer Reifenaufbautrommel (10) und darunter eine perspektivische Ansicht einer Reifenaufbautrommel (10). Die Reifenaufbautrommel (10) weist einen Mittelteil (12) und zwei neben dem Mittelteil (12) angeordnete Trommelhälften (11) auf und ist auf einer Trommelwelle (13) gelagert. Die radiale Symmetrieachse der Reifenaufbautrommel (10) ist gestrichelt eingezeichnet. Der Inner Liner (101) ist mithilfe eines nicht dargestellten Lagenservers (20) mittig auf die Reifenaufbautrommel (10) aufbringbar.

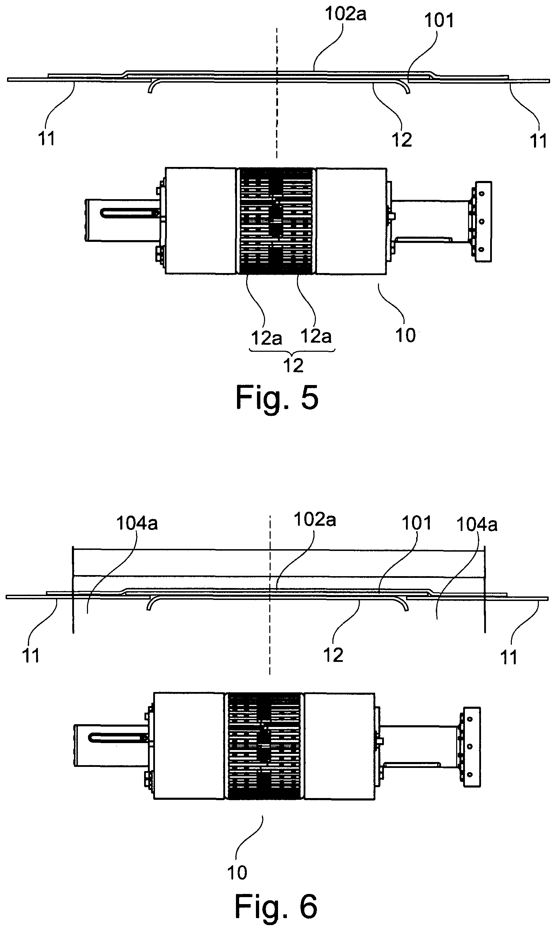

In Figur 5 ist eine schematische Darstellung der Positionierung von Body Ply (102) als eine zweite Lage auf einer Reifenaufbautrommel (10) und eine Seitenansicht einer Reifenaufbautrommel (10) dargestellt. Das Body Ply (102) ist mithilfe des Lagenservers (20) mittig auf die Reifenaufbautrommel (10) mit dem bereits aufliegenden Inner Liner (101) aufbringbar.

Figur 6 zeigt die Darstellung aus Figur 5 mit eingezeichneter Position der äußeren Enden (104a) des Seitenwandmaterials (104) zur Veranschaulichung des Setzmaßes der Lagen. Das Material des Body Ply (102) ragt über die Position der äußeren Enden (104a) des Seitenwandmaterials (104) hinaus, sodass ein Body Ply mit Hochumschlag (102a) realisierbar ist.

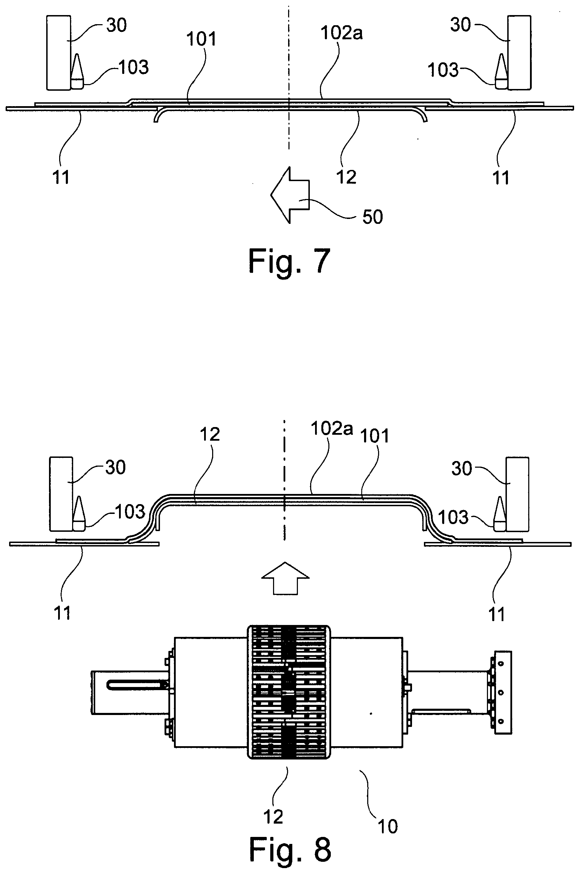

In Figur 7 ist eine schematische Ansicht eines Ausschnittes der Reifenaufbautrommel (10) im Bereich der Kernsetzvorrichtung (30) dargestellt. In diesem Verfahrensschritt wird das Setzen der Kerne (103) vorbereitet. In dem dargestellten Ausführungsbeispiel der Erfindung ist die Kernsetzvorrichtung (30) im Bereich des Reifenaufbaurings (50) angeordnet, sodass die Reifenaufbautrommel (10) zunächst aus dem Bereich des Lagenservers (20) in den Bereich des Reifenaufbaurings (50) transferiert wird, was durch den Pfeil unterhalb der schematischen Darstellung der Reifenaufbautrommel (10) illustriert ist. Die Kerne (103) sind von der Kernsetzvorrichtung (30) gehaltert.

Figur 8 zeigt einen weiteren Verfahrensschritt eines erfindungsgemäßen Verfahrens zur Herstellung von Reifenrohlingen im Zusammenhang mit dem Setzen der Kerne (103). Die Reifenaufbautrommel (10) ist weiter im Bereich des Reifenaufbaurings (50) und der Kernsetzvorrichtung (30) angeordnet und das Mittelteil (12) wird in radialer Richtung expandiert. Die Kerne sind weiterhin von der Kernsetzvorrichtung (30) gehaltert.

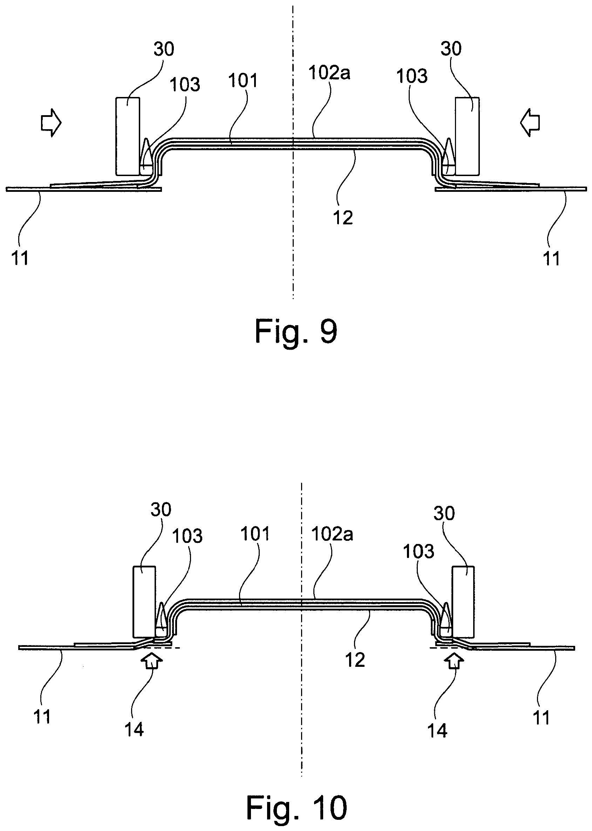

In Figur 9 ist ein folgender Verfahrensschritt eines erfindungsgemäßen Verfahrens zur Herstellung von Reifenrohlingen im Zusammenhang mit dem Setzen der Kerne (103) dargestellt. Die Kerne (103) werden mithilfe der Kernsetzvorrichtung (30) von außen an die auf dem Mittelteil (12) der Reifenaufbautrommel (10) aufliegenden Lagen (101, 102a) herangefahren.

Figur 10 zeigt die nach dem in Figur 9 dargestellten Verfahrensschritt folgende Klemmung der zuvor positionierten Kerne (103) mithilfe radial ausfahrbarer Kernklemmvorrichtungen (14), die im Bereich der Trommelhälften (11) angeordnet sind.

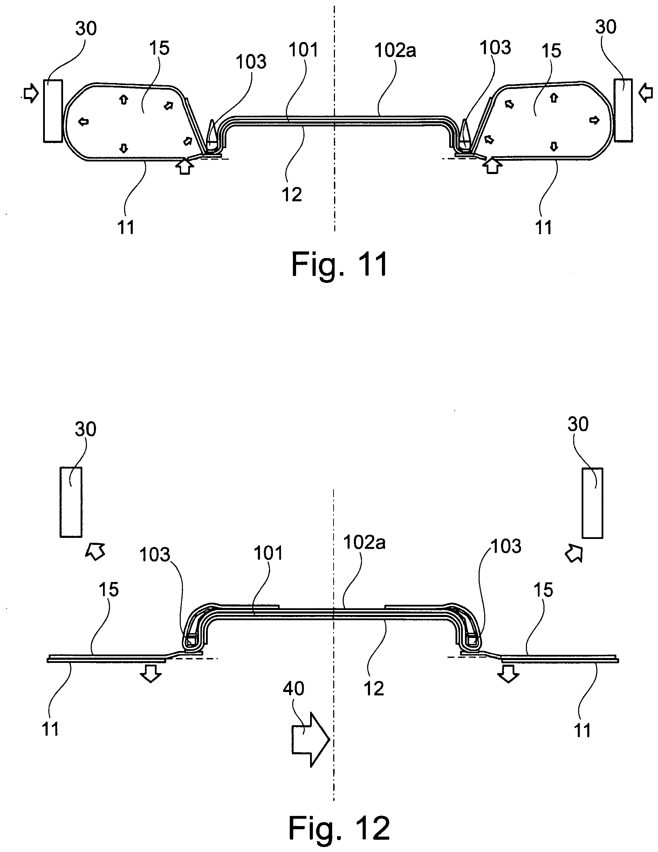

In Figur 11 ist der nach der Kernsetzung erfolgende Verfahrensschritt des Lagenumschlages dargestellt. Die Lagen (101, 102) werden mithilfe von als Bälgen ausgebildeten Umschlagvorrichtungen (15), die jeweils im Bereich einer Trommelhälfte (11) angeordnet sind, um die Kerne (103) herum umgeschlagen und angedrückt. Dazu werden die Bälge (15) von innen belüftet, sodass diese expandieren. Die Kernsetzvorrichtung (30) wird dabei zur Formung der als Bälge ausgebildeten Umschlagvorrichtungen (15) eingesetzt. Dazu ist die Kernsetzvorrichtung (30) jeweils von außen an die expandierenden oder die expandierten Bälge heranfahrbar, sodass ein in Richtung des Mittelteils (12) der Reifenaufbautrommel (10) wirkende Kraft auf die Bälge ausgeübt wird.

Figur 12 zeigt den teilweise gefertigten Reifenrohling (100) nach dem vorstehend beschriebenen Lagenumschlag. Der Inner Liner (101) und das Body Ply (102a) sind um die Kerne (103) herum umgeschlagen und angedrückt. Die Kernsetzvorrichtung (30) wird von der Reifenaufbautrommel (10) weg zurückgefahren und die Umschlagvorrichtungen (15) werden, in dem dargestellten Ausführungsbeispiel durch Entlüftung der Bälge, zurückgestellt. Die Reifenaufbautrommel (10) wird mit dem soweit gefertigten Reifenrohling (100) zum Seitenwandserver (40) transferiert.

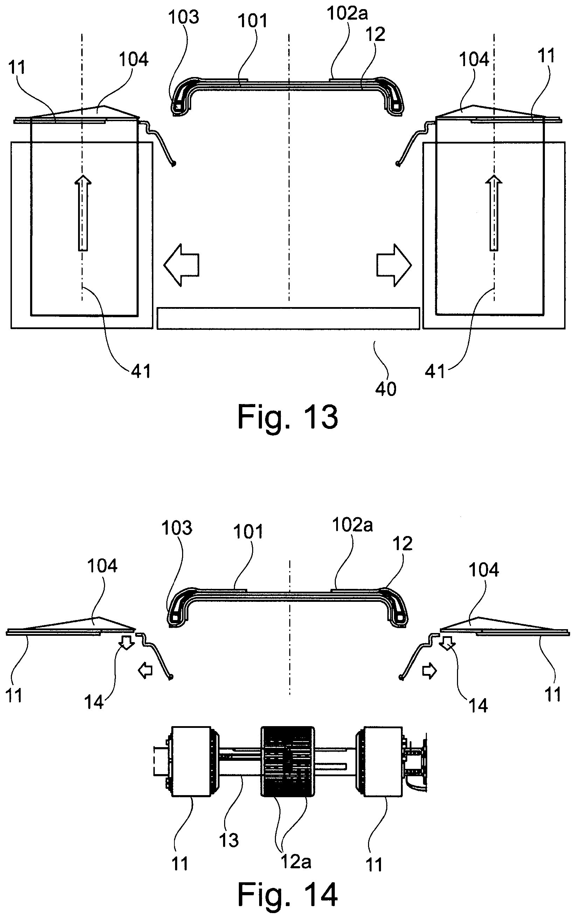

In Figur 13 ist eine schematische Darstellung eines Ausschnittes der Reifenaufbautrommel (10) bei der Übergabe des Seitenwandmaterials von einem zweiteiligen Seitenwandserver (40) einer erfindungsgemäßen Reifenaufbaumaschine dargestellt. Die Seitenwandservermodule (41) sind derart voneinander beabstandet, dass das Seitenwandmaterial je einer Seitenwand (104) des Reifenrohlings (100) mit jeweils einem Seitenwandservermodul (41) auf eine Trommelhälfte (11) aufbringbar ist, wobei die Trommelhälften (11) auf der Trommelwelle (13) in eine von dem Mittelteil (12) der Reifenaufbautrommel (10) beabstandete Position verfahren sind.

Figur 14 zeigt die in Figur 13 dargestellte schematische eine Darstellung eines Ausschnittes der Reifenaufbautrommel (10) bei der Übergabe des Seitenwandmaterials von einem zweiteiligen Seitenwandserver (40) einer erfindungsgemäßen Reifenaufbaumaschine und darunter eine Seitenansicht einer Reifenaufbautrommel (10). Die Trommelhälften (11) sind auf der Trommelwelle (13) in eine von dem Mittelteil (12) der Reifenaufbautrommel (10) beabstandete Position verfahren und die Kernklemmvorrichtung (14) ist eingefahren. Das Mittelteil (12) der Reifenaufbautrommel (10) ist weiterhin in radialer Richtung expandiert.

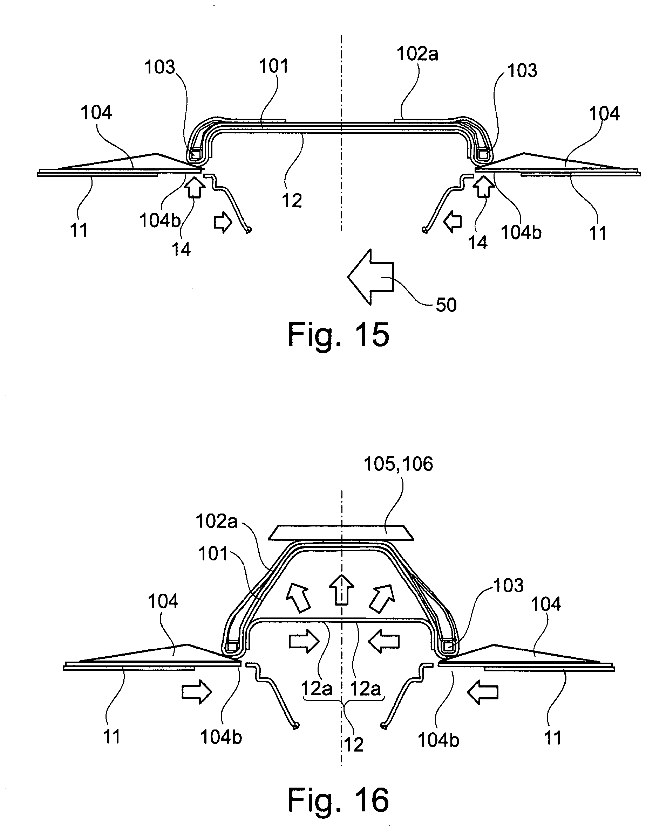

In Figur 15 ist eine schematische Darstellung eines Ausschnittes der Reifenaufbautrommel (10) in einem weiteren Verfahrensschritt eines erfindungsgemäßen Verfahrens zur Herstellung von Reifenrohlingen (100) dargestellt. Die Reifenaufbautrommel (10) wurde in den Arbeitsbereich des Reifenaufbaurings (50) transferiert. Die mit den Seitenwänden (104) belegten Trommelhälften (11) werden in Richtung der gestrichelt dargestellten Trommelmitte verfahren, sodass das Material der Seitenwände (104) in einem Endbereich (104b) unter den Kernen (103) des übrigen auf dem Mittelteil (12) der Reifenaufbautrommel (10) gehalterten Reifenrohlings (100) liegt. Anschließend werden die unter den Kernen (103) positionierten Endbereiche der Seitenwände (104) mit der Kernklemmvorrichtung (14) durch Ausfahren derselben unter den Kernen (103) an den Reifenrohling (100) angedrückt.

Figur 16 zeigt eine schematische Darstellung eines Ausschnittes der Reifenaufbautrommel (10) in einem weiteren Verfahrensschritt eines erfindungsgemäßen Verfahrens zur Herstellung von Reifenrohlingen (100). Die Reifenaufbautrommel (10) ist weiterhin im Arbeitsbereich des Reifenaufbaurings (50) positioniert. Die Module (12a) des Mittelteils (12) werden in axialer Richtung zusammengefahren, sodass die Breite des Mittelteils (12) reduziert wird, und die Trommelhälften (11) werden in gleichem Maße in Richtung der gestrichelt dargestellten Trommelmitte verfahren, sodass die Position der Seitenwände (104) zu den Kernen (103) des Reifenrohlings (100) unverändert ist. Diese Stellung der Reifenaufbautrommel (10) wird als Shaping Position bezeichnet. Der Reifenrohling (100) wird von innen belüftet, sodass sich die Mitte des Reifenrohlings (100) von dem Mittelteil (12) der Reifenaufbautrommel (10) anhebt. Das Gürtelpaket (105) wird gemeinsam mit dem Laufstreifen (106) auf dem Mittelteil des Reifenrohlings (100) positioniert.

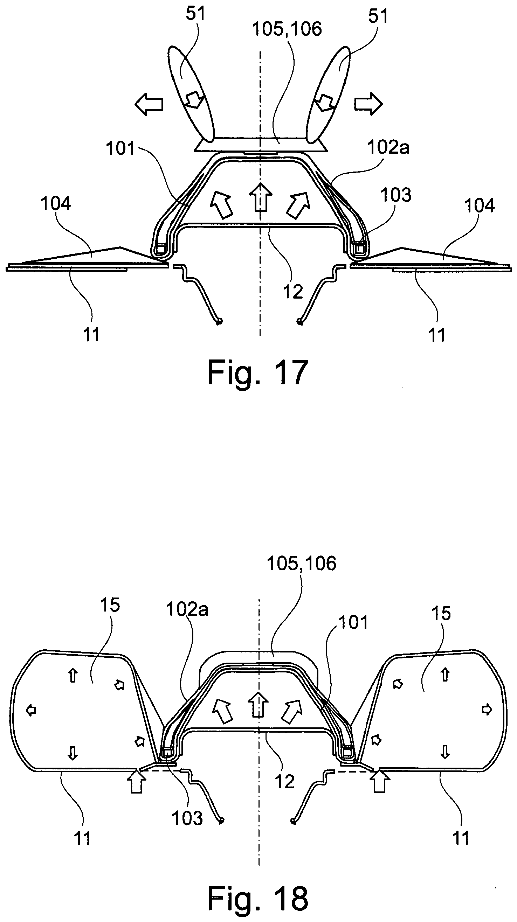

In Figur 17 ist der auf den in Figur 16 dargestellten Verfahrensschritt folgende Verfahrensschritt eines erfindungsgemäßen Verfahrens zur Herstellung von Reifenrohlingen (100) dargestellt. Der Verbund von Gürtelpaket (105) und Laufstreifen (107) wird mithilfe einer Andrückvorrichtung (51) an den übrigen Reifenrohling (100) angedrückt.

Figur 18 zeigt den Reifenrohling (100) mit angedrücktem Verbund aus Gürtelpaket (105) und Laufstreifen (106). Weiterhin werden die Seitenwände (104) mithilfe der Umschlagvorrichtung (15) an den übrigen Reifenrohling (100) angedrückt. Dazu werden in der dargestellten Ausführungsform einer Reifenaufbaumaschine die Bälge der Umschlagvorrichtung (15) von innen belüftet und dadurch expandiert, sodass die Seitenwände (104) von den Trommelhälften (11) angehoben werden und seitlich an den übrigen Reifenrohling (100) angedrückt werden. Die Kernklemmvorrichtung (14) ist zur Fixierung des Reifenrohlings (100) auf der Reifenaufbautrommel (10) aktiv.

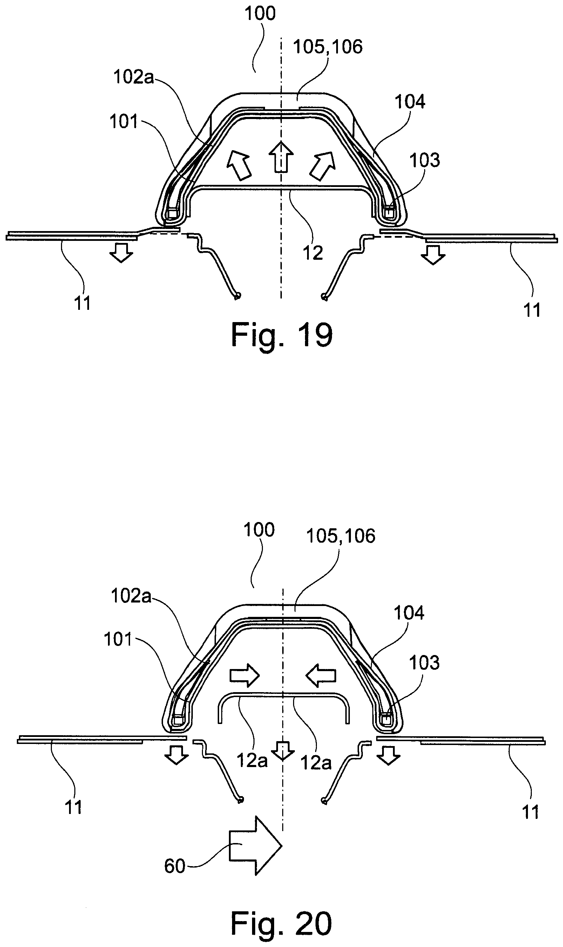

In Figur 19 ist der Reifenrohling (100) auf der Reifenaufbautrommel (10) nach erfolgtem Andrücken der Seitenwände (104) dargestellt. Die Umschlagvorrichtungen (15) werden durch eine Entlüftung der Bälge zurückgefahren, während der Reifenrohling (100) weiter von innen belüftet wird. Die Kernklemmvorrichtung (14) ist weiterhin aktiv.

Figur 20 zeigt den fertiggestellten Reifenrohling (100) auf der Reifenaufbautrommel (10). Diese wird in den Bereich einer Entladevorrichtung (60) transferiert. Zur Freigabe des Reifenrohlings (100) für die Entladevorrichtung (100) werden die Module (12a) des Mittelteils (12) der Reifenaufbautrommel (10) weiter zusammengefahren, sodass die Breite des Mittelteils (129 weiter verringert ist. Die Kernklemmvorrichtung (14) wird eingefahren und der Reifenrohling (100) entlüftet.

## Patentansprüche

1. Vorrichtung zur Herstellung von Reifenrohlingen (1), ausgebildet als eine Reifenaufbaumaschine aufweisend mindestens eine Reifenaufbautrommel (10), einen Lagenserver (20), eine Kernsetzvorrichtung (30) und mindestens eine Umschlagvorrichtung (15) zum Umschlagen mindestens einer Lage um die Kerne (103) eines Reifenrohlings (100) und/oder zum Andrücken der Lagen eines Reifenrohlings (100) an den übrigen Reifenrohling (100), wobei die Reifenaufbautrommel (10) auf einer Trommelwelle (13) angeordnet ist und einen Mittelteil (12) und zwei in Relation zum Mittelteil (12) in axialer Richtung der Trommelwelle (13) relativ zum Mittelteil (12) verfahrbare Trommelhälften (11) aufweist, wobei diese einen Seitenwandserver (40) aufweist, mit dem das Material der beiden Seitenwände (104) eines Reifenrohlings (100) zeitgleich auf die Trommelhälften (11) der Reifenaufbautrommel (10) übergebbar bzw. auf diese auflegbar ist, **dadurch gekennzeichnet, dass** der Seitenwandserver (40) zwei Seitenwandservermodule (41) aufweist, mit denen jeweils das Material einer Seitenwand (104) auf eine Trommelhälfte (11) einer Reifenaufbautrommel (10) übergebbar ist und dass die Seitenwandservermodule (41) mit einem Abstand zueinander angeordnet sind, sodass zwischen den Seitenwandservermodulen (41) ein Freiraum im Bereich des Seitenwandservers (40) angeordnet ist.

2. Vorrichtung zur Herstellung von Reifenrohlingen (1) nach Anspruch 1, **dadurch gekennzeichnet, dass** jedes Seitenwandservermodul (41) eine Transportvorrichtung für das Seitenwandmaterial aufweist.

3. Verfahren zur Herstellung von Reifenrohlingen (100), wobei mithilfe einer Vorrichtung zur Herstellung von Reifen (1) ein Reifenrohling (100) hergestellt wird und bei dem mindestens eine Lage des Reifenrohlings (100) mit einem Hochumschlag ausgeführt wird und bei dem die Seitenwände (104) des Reifenrohlings (100) nach dem Andrücken an den Reifenrohling (100) den an den übrigen Reifenrohling (100) angedrückten Laufstreifen (106) überlappen, sodass ein Reifenrohling (100) im SOT-Aufbau hergestellt wird, **dadurch gekennzeichnet, dass** die Seitenwände (104) durch zwei Seitenwandservermodule (41) eines Seitenwandservers (40) zugeführt werden, wobei die Seitenwandservermodule (41) derart angeordnet werden, dass ein Abstand zueinander zur Bereitstellung eines Freiraumes erreicht wird.

4. Verfahren zur Herstellung von Reifenrohlingen (100) nach Anspruch 3, **dadurch gekennzeichnet, dass** in einem Verfahrensschritt der Inner Liner (101) als eine erste Lage des Reifenrohlings (100) mittig auf einer Reifenaufbautrommel (10) positioniert wird und in einem weiteren Verfahrensschritt mit einem Body Ply (102) eine zweite Lage über der ersten Lage mittig auf der Reifenaufbautrommel (10) positioniert wird und in einem weiteren Verfahrensschritt der Mittelteil (12) der Reifenaufbautrommel (10) in radialer Richtung expandiert wird und in einem weiteren Verfahrensschritt die zwei Kerne (103) des Reifenrohlings (100) mithilfe einer Kernsetzvorrichtung (30) gesetzt werden und dass die gesetzten Kerne (103) in einem Verfahrensschritt mithilfe einer Kernklemmvorrichtung (14) geklemmt werden und in einem Verfahrensschritt die Lagen (101, 102) mithilfe zumindest einer Umschlagvorrichtung (15) um die Kerne (103) umgeschlagen werden und das Material für die Seitenwände (104) des Reifenrohlings (100) in einem Verfahrensschritt mithilfe eines Seitenwandservers (40) auf je eine Trommelhälfte (11) erfolgt, wobei die Trommelhälften (11) in Relation zum Mittelteil (12) der Reifenaufbautrommel (10) beabstandet positioniert sind und in einem Verfahrensschritt die Trommelhälften (11) zum Mittelteil (12) hin verfahren werden, sodass das Material der Seitenwände (104) in je einem Endbereich (104b) unter den Kernen (103) des Reifenrohlings (100) positioniert ist und in einem Verfahrensschritt das Material der Seitenwände (104) unterhalb der Kerne (103) mithilfe der Kernklemmvorrichtung (14) an den Reifenrohling (100) angedrückt wird und in einem Verfahrensschritt der Reifenrohling belüftet wird und in einem Verfahrensschritt das Gürtelpaket (105) und der Laufstreifen (106) positioniert werden und mithilfe einer Andrückvorrichtung (51) an den übrigen Reifenrohling (100) angedrückt werden und in einem Verfahrensschritt die Seitenwände (104) mithilfe der Umschlagvorrichtung (15) an den Reifenrohling (100) angedrückt werden, sodass diese bereichsweise den Laufstreifen (106) überlappen.

5. Verfahren zur Herstellung von Reifenrohlingen (100) nach mindestens einem der Ansprüche 3 und 4, **dadurch gekennzeichnet, dass** eine Vorrichtung zur Herstellung von Reifenrohlingen (1) nach mindestens einem der Ansprüche 1 bis 2 verwendet wird.

## Claims

1. Device for producing green tyres (1), formed as a tyre building machine having at least one tyre building drum (10), a ply server (20), a core setting device (30) and at least one turning-up device (15) for turning up at least one ply around the cores (103) of a green tyre (100) and/or for pressing the plies of a green tyre (100) against the rest of the green tyre (100), wherein the tyre building drum (10) is arranged on a drum shaft (13) and has a middle part (12) and two drum halves (11), which can be moved in relation to the middle part (12) in the axial direction of the drum shaft (13) relative to the middle part (12), wherein this device has a sidewall server (40), with which the material of the two sidewalls (104) of a green tyre (100) can be transferred at the same time onto the drum halves (11) of the tyre building drum (10) or laid on them, **characterized in that** the sidewall server (40) has two sidewall server modules (41), with which in each case the material of a sidewall (104) can be transferred onto a drum half (11) of a tyre building drum (10) and **in that** the sidewall server modules (41) are arranged at a distance from one another, so that between the sidewall server modules (41) a clearance is arranged in the region of the sidewall server (40).

2. Device for producing green tyres (1) according to Claim 1, **characterized in that** each sidewall server module (41) has a transporting device for the sidewall material.

3. Method for producing green tyres (100), wherein a green tyre (100) is produced by means of a device for producing tyres (1) and in which at least one ply of the green tyre (100) is formed with a high turn-up and in which, after pressing against the green tyre (100), the sidewalls (104) of the green tyre (100) overlap the tread (106) pressed against the rest of the green tyre (100), so that a green tyre (100) of the SOT construction is produced, **characterized in that** the sidewalls (104) are supplied by two sidewall server modules (41) of a sidewall server (40), wherein the sidewall server modules (41) are arranged in such a way that a distance from one another is achieved to provide a clearance.

4. Method for producing green tyres (100) according to Claim 3, **characterized in that**, in one method step, the inner liner (101) is positioned as a first ply of the green tyre (100) centrally on a tyre building drum (10) and, in a further method step, with a body ply (102) a second ply is positioned over the first ply centrally on the tyre building drum (10) and, in a further method step, the middle part (12) of the tyre building drum (10) is expanded in the radial direction and, in a further method step, the two cores (103) of the green tyre (100) are set by means of a core setting device (30) and **in that**, in one method step, the set cores (103) are clamped by means of a core clamping device (14) and, in one method step, the plies (101, 102) are turned up around the cores (103) by means of at least one turning-up device (15) and, in one method step, the material for the sidewalls (104) of the green tyre (100) takes place onto one drum half (11) each by means of a sidewall server (40), wherein the drum halves (11) are positioned at a distance in relation to the middle part (12) of the tyre building drum (10) and, in one method step, the drum halves (11) are moved towards the middle part (12), so that the material of the sidewalls (104) in one end region (104b) each is positioned under the cores (103) of the green tyre (100) and, in one method step, the material of the sidewalls (104) is pressed against the green tyre (100) under the cores (103) by means of the core clamping device (14) and, in one method step, air is introduced into the green tyre and, in one method step, the breaker belt assembly (105) and the tread (106) are positioned and pressed against the rest of the green tyre (100) by means of a pressure-exerting device (51) and, in one method step, the sidewalls (104) are pressed against the green tyre (100) by means of the turning-up device (15), so that in some regions they overlap the tread (106).

5. Method for producing green tyres (100) according to at least one of Claims 3 and 4, **characterized in that** a device for producing green tyres (1) according to at least one of Claims 1 to 2 is used.

## Revendications

1. Dispositif permettant de fabriquer des pneus crus (1), réalisé sous la forme d'une machine de confection de pneu présentant au moins un tambour de confection de pneu (10), un distributeur de nappes (20), un dispositif de pose de noyau (30) et au moins un dispositif de retournement (15) pour retourner au moins une nappe autour des noyaux (103) d'un pneu cru (100) et/ou pour plaquer les nappes d'un pneu cru (100) contre le reste du pneu cru (100), dans lequel le tambour de confection de pneu (10) est disposé sur un arbre de tambour (13) et présente une partie centrale (12) et deux demi-tambours (11) pouvant être déplacés par rapport à la partie centrale (12) dans la direction axiale de l'arbre de tambour (13) par rapport à la partie centrale (12), dans lequel le dispositif présente un distributeur de flancs (40) qui permet de transférer ou de déposer le matériau des deux flancs (104) d'un pneu cru (100) en même temps sur les demi-tambours (11) du tambour de confection de pneu (10),
**caractérisé en ce que** le distributeur de flancs (40) présente deux modules de distributeur de flancs (41) qui permettent respectivement de transférer le matériau d'un flanc (104) sur un demi-tambour (11) d'un tambour de confection de pneu (10), et **en ce que** les modules de distributeur de flancs (41) sont disposés à distance l'un de l'autre de sorte qu'entre les modules de distributeur de flancs (41) un espace libre est disposé dans la zone du distributeur de flancs (40).

2. Dispositif permettant de fabriquer des pneus crus (1) selon la revendication 1, **caractérisé en ce que** chaque module de distributeur de flancs (41) présente un dispositif de transport pour le matériau de flanc.

3. Procédé permettant de fabriquer des pneus crus (100), dans lequel un pneu cru (100) est fabriqué à l'aide d'un dispositif de fabrication de pneus (1), et dans lequel au moins une nappe du pneu cru (100) est réalisée avec un retournement haut, et dans lequel les flancs (104) du pneu cru (100), après le placage contre le pneu cru (100), chevauchent la bande de roulement (106) plaquée contre le reste du pneu cru (100), de façon à fabriquer un pneu cru (100) à structure SOT,
**caractérisé en ce que** les flancs (104) sont alimentés par deux modules de distributeur de flancs (41) d'un distributeur de flancs (40), dans lequel les modules de distributeur de flancs (41) sont disposés de façon à obtenir une distance mutuelle pour fournir un espace libre.

4. Procédé permettant de fabriquer des pneus crus (100) selon la revendication 3, **caractérisé en ce que** dans une étape de procédé, l'habillage intérieur (101) sous forme de première nappe du pneu cru (100) est positionné au centre sur un tambour de confection de pneu (10), et dans une étape de procédé supplémentaire, à l'aide d'une nappe de carcasse (102), une deuxième nappe est positionnée sur la première nappe au centre sur le tambour de confection de pneu (10), et dans une étape de procédé supplémentaire, la partie centrale (12) du tambour de confection de pneu (10) est expansée dans la direction radiale, et dans une étape de procédé supplémentaire, les deux noyaux (103) du pneu cru (100) sont posés à l'aide d'un dispositif de pose de noyau (30), et **en ce que** les noyaux (103) posés sont dans une étape de procédé serrés à l'aide d'un dispositif de serrage de noyau (14), et dans une étape de procédé, les nappes (101, 102) sont retournées sur les noyaux (103) à l'aide d'au moins un dispositif de retournement (15), et le matériau pour les flancs (104) du pneu cru (100) est effectué dans une étape de procédé à l'aide d'un distributeur de flancs (40) sur respectivement un demi-tambour (11), dans lequel les demi-tambours (11) sont positionnés à distance par rapport à la partie centrale (12) du tambour de confection de pneu (10), et dans une étape de procédé les demi-tambours (11) sont déplacés vers la partie centrale (12) de sorte que le matériau des flancs (104) est positionné dans respectivement une zone d'extrémité (104b) sous les noyaux (103) du pneu cru (100), et dans une étape de procédé, le matériau des flancs (104) est plaqué au-dessous des noyaux (103) à l'aide du dispositif de serrage de noyau (14) contre le pneu cru (100), et dans une étape de procédé, le pneu cru est ventilé, et dans une étape de procédé l'ensemble de ceintures (105) et la bande de roulement (106) sont positionnés et sont plaqués contre le reste du pneu cru (100) à l'aide d'un dispositif de placage (51), et dans une étape de procédé, les flancs (104) sont plaqués à l'aide du dispositif de retournement (15) contre le pneu cru (100) de sorte que ceux-ci chevauchent par endroits la bande de roulement (106).

5. Procédé permettant de fabriquer des pneus crus (100) selon au moins l'une des revendications 3 et 4, **caractérisé en ce que** le dispositif permettant de fabriquer des pneus crus (1) selon l'une quelconque des revendications 1 à 2 est utilisé.
